# EUROPEAN PATENT APPLICATION

(11) **EP 3 832 452 A1**
(43) Date of publication of application: **09.06.2021**
(21) Application number: 18930552.7
(22) Date of filing: 20.09.2018
(51) Int. Cl.: G06F 3/12

(54) **LOG PRINTING METHOD AND SYSTEM, SERVER**

(30) Priority: 22.08.2018 CN 201810963165
(71) Applicant: Wangsu Science & Technology Co., Ltd., Shanghai 200030 (CN)
(72) Inventor: CHEN, Qinglong, Shanghai 200030 (CN)
(74) Representative: de Arpe Fernandez, Manuel
(86) International application number: PCT/CN2018/106641
(87) International publication number: WO 2020/037753

(57) **Abstract**

The embodiments of the present disclosure provide a log printing method, which includes the following step: configuring a log sampling ratio and a log level for an application; after the application receives a service request, determining, based on the log sampling ratio, whether to print all logs and caching a sampling tag; when the application processes the service request, reading the sampling tag and the log level; when the read sampling tag indicates no sampling, processing, by the application, the service request and printing, by the application, logs that have a log level equal to and higher than the configured log level and correspond to the service request; and when the read sampling tag indicates a sampling, processing, by the application, the service request and printing, by the application, all logs that correspond to the service request. The embodiments of the present disclosure further provide a log printing system and server. The present disclosure may reduce the amount of log printing without affecting the locating of the cause of an anomaly.

## Description

### FIELD OF DISCLOSURE

The present disclosure generally relates to the field of Internet technology, and more particularly, relates to a method, system and server for log printing.

### BACKGROUND

Applications on a server may generate logs in processing a service request. The logs record event level, date and time, source, event ID, and task category, etc. Through analysis of the logs, a cause and a location of an occurred anomaly may be troubleshooted.

Currently, in log printing, the amount of printed log may be reduced by controlling an output level. Commonly used log levels include "error", "warn", "info", "debug", etc. Controlling the output level means that when a high log level is configured, the logs below this level will not be printed. For example, since the level of "error" is higher than the levels of "warn", "info", and "debug" and the level of "debug" is the lowest level, when the level of "error" is configured, only logs at the level of "error" will be output. When the level of "debug" is configured, the "error", "warn", "info", and "debug" logs will be output. In order to avoid the degradation of CPU processing performance due to the excessive log printing, generally, in the process of processing a request, the number of logs is cut down and the level of log printing is increased. However, this approach still cannot meet the requirement of reducing the amount of log printing. The outputting of a large number of logs may still cause the degradation of CPU processing performance, which becomes the bottleneck of service processing.

In light of the above, there is a need to provide a log printing method that may further control the amount of log printing.

### BRIEF SUMMARY OF THE DISCLOSURE

The objective of the present disclosure is to provide a log printing method, which may reduce the amount of log printing.

To achieve the above objective, in one aspect, the present disclosure provides a log printing method. The method includes the following steps: configuring a log sampling ratio and a log level for an application; after the application receives a service request, determining, based on the log sampling ratio, whether to print all logs and caching a sampling tag; when the application processes the service request, reading the sampling tag and the log level; when the read sampling tag indicates no sampling, processing, by the application, the service request and printing, by the application, logs that have a log level equal to and higher than the configured log level and correspond to the service request; and when the read sampling tag indicates a sampling, processing, by the application, the service request and printing, by the application, all logs that correspond to the service request.

Further, the method also includes the following step:

when the log sampling ratio and/or the log level is changed, pushing the changed log sampling ratio and/or log level to an interface of the application, and receiving, by the application through the interface, the changed log sampling ratio and/or log level and updating the log sampling ratio and/or log level.

Further, the application includes a plurality of interfaces, and each of the plurality of interfaces is provided with a corresponding log sampling ratio and a corresponding log level.

Further, the log sampling ratio and the log level include a first log sampling ratio and a first log level, a second log sampling ratio and a second log level, and a third log sampling ratio and a third log level, and the first log sampling ratio is greater than the second log sampling ratio, the first log level is lower than the second log level, the third log sampling ratio is greater than or equal to the first log sampling ratio, and the third log level is lower than or equal to the first log level.

Further, when the application is put in service for the first time, printing, by the application, logs that correspond to the service request according to the first log sampling ratio and the first log level, when the application runs stably, printing, by the application, logs that correspond to the service request according to the second log sampling ratio and the second log level, and when the application runs abnormally, printing, by the application, logs that correspond to the service request according to the third log sampling ratio and the third log level.

Further, the log sampling ratio is N/M, and N is less than or equal to M.

Further, the step of determining, based on the log sampling ratio, whether to print all logs and caching the sampling tag after the application receives the service request specifically includes:

after the application receives the service request, randomly selecting, by the application, a number X from 0-M; and

determining whether X is less than N, if X is less than N, printing, by the application, all logs that correspond to the service request, and if X is greater than or equal to N, printing, by the application, logs that correspond to the service request and have a log level lower than the configured log level.

To achieve the above objective, in another aspect, the present disclosure further provides a log printing system, which comprises a configuration center and a server. The configuration center and the server together implement the above-described log printing methods.

To achieve the above objective, in another aspect, the present disclosure further provides a server. The server runs at least one application module, where the application module includes an interceptor that is configured to, after receiving a service request, determine, based on a log sampling ratio, whether to print all logs and cache a sampling tag; and a log printer that is configured to read the sampling tag and a configured log level in a process of processing the service request, print all logs that correspond to the service request when the read sampling tag indicates a sampling, and print logs that have a log level equal to and higher than the configured log level and correspond to the service request when the read sampling tag indicates no sampling.

Further, the application module includes a plurality of interfaces, and each of the plurality of interfaces is provided with a corresponding log sampling ratio and a corresponding log level.

Further, the log sampling ratio and the log level include a first log sampling ratio and a first log level, a second log sampling ratio and a second log level, and a third log sampling ratio and a third log level, and the first log sampling ratio is greater than the second log sampling ratio, the first log level is lower than the second log level, the third log sampling ratio is greater than or equal to the first log sampling ratio, and the third log level is lower than or equal to the first log level.

Further, the log printer is configured to print logs corresponding to the service request based on the first log sampling ratio and the first log level, or the second log sampling ratio and the second log level, or the third log sampling ratio and the third log level.

Further, the log sampling ratio is N/M, and N is less than or equal to M.

Further, the interceptor is also configured to, after receiving the service request, randomly select a number X from 0-M, and determine whether X is less than N.

As can be seen from the above, in the log printing method provided by the embodiments of the present disclosure, through setting a dynamic log sampling ratio and log level by the configuration center based on the operating state of an application on a server, the amount of log printing may be controlled in real time, and may be increased and decreased as necessary. This may not only reduce the burden on the CPU, but also increase the throughput of the CPU and memory without affecting the locating of the cause of an anomaly. Moreover, in the embodiments of the present disclosure, different log sampling ratios may be set for different interfaces of a same application, which further reduces the burden on the CPU and increases the throughput of the CPU and memory.

### BRIEF DESCRIPTION OF THE DRAWINGS

To make the technical solutions in the embodiments of the present disclosure clearer, a brief introduction of the accompanying drawings consistent with descriptions of the embodiments will be provided hereinafter. It is to be understood that the following described drawings are merely some embodiments of the present disclosure. Based on the accompanying drawings and without creative efforts, persons of ordinary skill in the art may derive other drawings.
FIG. 1 is a schematic diagram of a log printing system according to some embodiments of the present disclosure;
FIG. 2 is a flowchart of a log printing method according to some embodiments of the present disclosure;
FIG. 3 is a structural block diagram of a server according to some embodiments of the present disclosure; and
FIG. 4 is a schematic structural diagram of a computer terminal according to some embodiments of the present disclosure.

### DETAILED DESCRIPTION

The technical solutions in the embodiments of the present disclosure will be described clearly and completely hereinafter with reference to the accompanying drawings in the embodiments of the present disclosure. It is to be clear that the embodiments to be described are merely a part rather than all of the embodiments of the present disclosure. All other embodiments obtained by a person skilled in the art based on the embodiments of the present disclosure without creative efforts shall fall within the protection scope of the present disclosure..

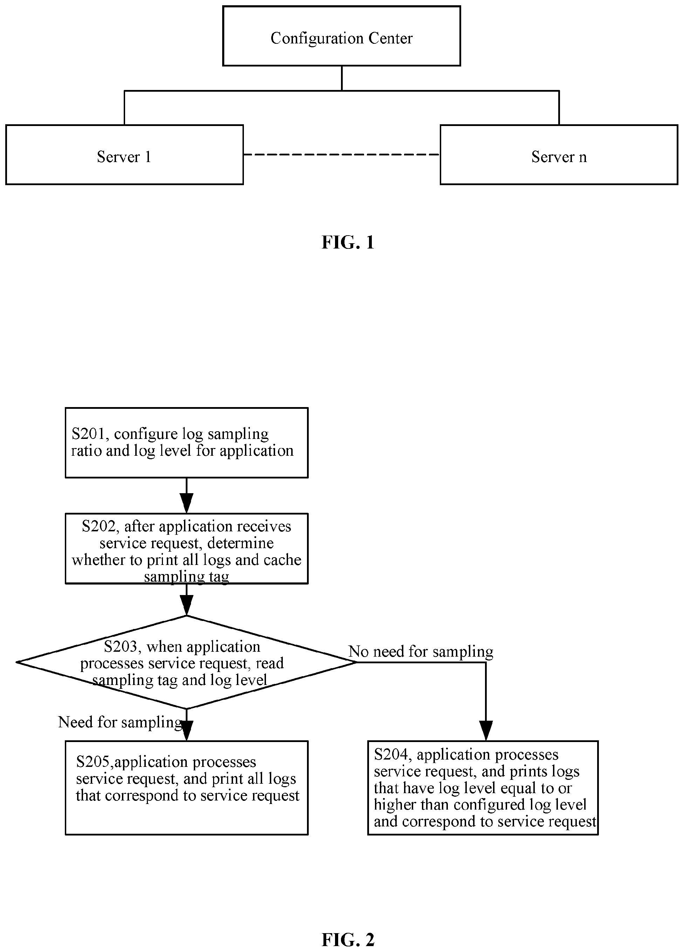

The log printing method provided by the embodiments of the present disclosure may be applied to a log printing system shown in FIG. 1. Here, the log printing system includes a configuration center and a plurality of servers 1-n (hereinafter collectively referred to as "server"). The configuration center is configured to provide log printing configuration information for applications running on the servers, and also modify the log printing configuration information and push the modified log printing configuration information to the servers. The configuration center may be a server cluster or a single server, which is not limited by the present disclosure. The servers 1-n may be a WEB server or an FTP server. Correspondingly, the applications running on the servers may be an HTTP application or an FTP application, the type of which is not limited by the present disclosure either. In addition, all the applications running on the servers include an interceptor and a log printer, the specific functions of which will be made in detail in the following discussions.

The log printing method shown in FIG. 2 will be described in detail hereinafter with reference to specific implementations. The content may be as follows:
Step S201: Configure a log sampling ratio and a log level for an application.

The log sampling ratio in the disclosed embodiment may be set to N/M, where N is less than or equal to M. It should be noted that the log sampling ratio is used to denote a probability of printing all the logs corresponding to a service request, but not to denote a ratio of printing all the logs of an application. This is because, for whatever the log sampling ratio is, logs with a log level equal to or higher than the configured log level are always subjected to printing. For example, if a level of "warn" is configured, the logs at the level of "warn" and the logs at the level of "error", which is higher than the level of "warn", will be printed. For this reason, the log sampling ratio may be also used to denote a probability to print logs with a log level lower than the configured log level. That is, the larger the value set for the log sampling ratio, the more likely that the logs, corresponding to an application interface, that have a log level lower than the configured log level, will be printed. For example, when the log sampling ratio is set to 0.2, i.e., 20/100, it means that there is a 20% probability to print logs, corresponding to an application interface, that have a log level lower than the configured log level, or the probability to print all logs corresponding to the service request is 20%. If the log sampling ratio is set to 0.8, it means that there is an 80% probability to print logs, corresponding to an application interface, that have a log level lower than the configured log level, or the probability to print all logs corresponding to the service request is 80%. Apparently, this still needs to be implemented in combination with a random algorithm, detail of which will be elaborated in the following steps.

In the disclosed embodiment, the log sampling ratio and the log level are first configured for an application running on a server through an operation interface provided by the configuration center. Besides the log sampling ratio and the log level, the configuration center may also configure log type, application name, interface name, and other configuration information. The configuration center may push the configuration information to an interface provided by the corresponding application. The interface may be a web service interface or a socket interface, which is not limited by the present disclosure. The configuration information for each application may be stored in the form of field(s) in the configuration center.

In one embodiment, when the log sampling ratio and/or the log level of an application are changed, the configuration center may push the changed log sampling ratio and/or log level to the interface of the application. The application may receive the changed log sampling ratio and/or log level through the interface and update the log sampling ratio and/or log level. Specifically, in order to acquire the log information of the application in processing a service request to locate a specific cause when the system runs abnormally or crashes, and also to reduce the amount of log information to be printed, the present disclosure may change the log sampling ratio and/or log level according to actual needs. Specifically, the fields for the log sampling ratio and/or the log level that needs to be changed may be retrieved from the operation interface provided by the configuration center and changed through the operation interface. The changed log sampling ratio and/or log level are pushed to the interface of the application. The application receives the changed log sampling ratio and/or log level through a web service interface or a socket interface and updates the log sampling ratio and/or log level. Later it may be determined whether to print logs according to the updated log sampling ratio and/or log level when printing the logs.

Optionally, when an application includes multiple interfaces, the corresponding log sampling ratio and log level may be set for each interface, so that more detailed log information may be output for a specific interface. As a result, not only the cause of an anomaly may be located for an interface, but also the amount of log printing may be reduced. In the disclosed embodiment, the corresponding log sampling ratios set for each interface may be the same or different. When all the interfaces of an application are configured with a same log sampling ratio, it means that the application adopts a uniform log sampling ratio.

In one embodiment, to further control the amount of log printing, the present disclosure further provides different log sampling ratios, depending on the different operating states of an application. Since a running application usually has three states, the disclosed embodiment provides a first log sampling ratio and a first log level, a second log sampling ratio and a second log level, and a third log sampling ratio and a third log level. Here, the first log sampling ratio is greater than the second log sampling ratio, the first log level is lower than the second log level, the third log sampling ratio is greater than or equal to the first log sampling ratio, and the third log level is lower than or equal to the first log level.

Specifically, the log sampling ratio and the log level may be configured as follows based on the operating state of an application: when an application is put in service for the first time, it is generally impossible to determine whether the application runs stably. Then the application or an interface of the application is configured with a relatively high first log sampling ratio and a relatively low first log level, so that more log information may be printed to analyze the operating state of the application. When the application runs stably, the application or an interface of the application is configured with a relatively low second log sampling ratio and a relatively high second log level to reduce the amount of log printing, so that the performance loss caused by the log printing may be avoided. When the application runs abnormally, the application or an interface of the application is configured with a relatively high third log sampling ratio and a relatively low third log level. For example, when an application is put in service for the first time or runs abnormally, an interface of the application may be configured with a relatively large log sampling ratio and a relatively low log level, even a log sampling ratio of 100% and a log level of "debug" may be adopted, to print more logs to facilitate analyzing the logs and locating the cause of an anomaly. For an interface of the application that runs stably, a relatively low log sampling ratio, for example, a 10% log sampling ratio, and a log level of "error" may be set. Through the described approach, it may be achieved that when there is a need to locate the cause of an anomaly, more logs will be printed, and when there is no need to locate the cause of an anomaly, fewer logs will be printed. Hence, an effective reduction of the amount of log printing may be eventually accomplished without affecting the log analysis.

It should be noted that the first log sampling ratio and the first log level, the second log sampling ratio and the second log level, and the third log sampling ratio and the third log level in the above-described embodiments may be stored as default values in the log configuration center, which may be then selected in real-time and pushed to an application based on the actual operating state of the application.

Step S202: after receiving the service request, the application determines, based on the log sampling ratio, whether to print all the logs and cache a sampling tag.

It should be noted that each service request has a unique ID. By caching a sampling tag corresponding to a service request, the application may identify whether the logs of a service request needs to be printed.

The specific process of this step is: after receiving a service request, through the interceptor, the application randomly selects a number X from 0-M according to the log sampling ratio set by an interface of the application and determines whether X is less than N. If X is less than N, a tag, indicating that all logs need to be printed, is cached for the service request. For example, a tag of "true" or "1" corresponding to the ID of the service request may be added. If X is greater than or equal to N, the service request is processed, and a tag, indicating that there is no need to print logs that correspond to the service request and have a log level lower than the configured log level, is cached for the service request. For example, a tag of "false" or "0" corresponding to the ID of the service request may be added. Subsequently, through reading the sampling tag corresponding to the ID of the service request, it may be determined whether to print all the logs.

Step S203: in the process of processing the service request, the application reads the sampling tag and the log level.

In the disclosed embodiment, while processing the service request, the application also reads the sampling tag corresponding to the ID of the service request based on the ID of the service request and determines, based on the sampling tag, whether to print all the logs corresponding to the service request. If the read sampling tag indicates that there is no need for sampling, proceed to Step S204; and if the read sampling tag indicates that there is a need for sampling, proceed to Step S205.

Step S204: the application processes the service request, and prints logs that have a log level equal to or higher than the configured log level and correspond to the service request.

In the disclosed embodiment, since the sampling tag read by the application is a "false" or "0", the application processes the service request, and prints logs that have a log level equal to or higher than the configured log level and correspond to the service request. In processing the service request, the application may return the corresponding information to the requesting party based on the type and content of the service request. For example, when the requesting party is a browser client that requests browsing a webpage, the application may return, through the HTTP protocol, the corresponding webpage content to the browser client. After the application has completed the processing of the service request, the previously cached printing tag may be cleared.

Step S205: the application processes the service request and prints all the logs corresponding to the service request.

In the disclosed embodiment, since the sampling tag read by the application is a "true" or "1", in processing the service request, the application also uses the log printer to print all the logs corresponding to the service request. After the application has completed the processing of the service request, the previously cached print tag may also be cleared.

As can be seen from the above, in the log printing method provided by the embodiments of the present disclosure, through setting a dynamic log sampling ratio and log level by the configuration center based on the operating state of an application on a server, the amount of log printing may be controlled in real time, and may be increased and decreased as necessary. This may not only reduce the burden on the CPU, but also increase the throughput of the CPU and memory without affecting the locating of the cause of an anomaly. Moreover, in the embodiments of the present disclosure, different log sampling ratios may be set for different interfaces of a same application, which further reduces the burden on the CPU and increases the throughput of the CPU and memory.

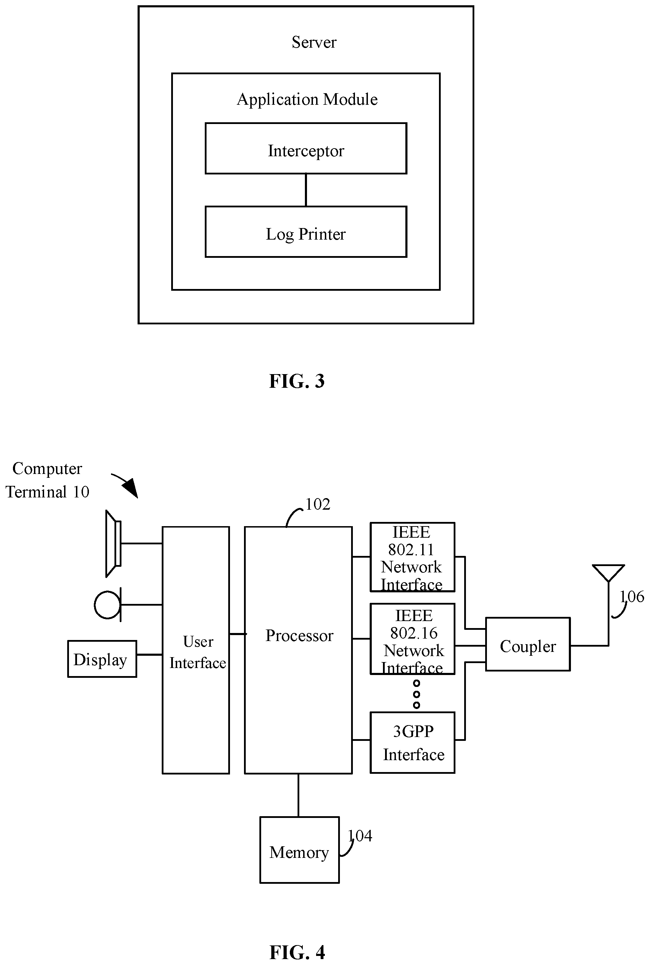

To implement the foregoing log printing methods, the embodiments of the present disclosure further provide a server as shown in FIG. 3.

The server of the embodiments of the present disclosure runs at least one application module, and the application module includes: an interceptor that is configured to, after receiving a service request, determine, based on a log sampling ratio, whether to print all logs and cache a sampling tag, and a log printer that is configured to read the sampling tag and the configured log level in a process of processing the service request, print all logs that correspond to the service request when the read sampling tag indicates a sampling, and print logs that have a log level equal to and higher than the configured log level and correspond to the service request when the read sampling tag indicates no sampling.

In one embodiment, the application module includes a plurality of interfaces, and each of the plurality of interfaces is provided with a corresponding log sampling ratio and a corresponding log level.

In one embodiment, the log sampling ratio and the log level include a first log sampling ratio and a first log level, a second log sampling ratio and a second log level, and a third log sampling ratio and a third log level, the first log sampling ratio is greater than the second log sampling ratio, the first log level is lower than the second log level, the third log sampling ratio is greater than or equal to the first log sampling ratio, and the third log level is lower than or equal to the first log level.

In one embodiment, the log printer is configured to print logs corresponding to the service request based on the first log sampling ratio and the first log level, or the second log sampling ratio and the second log level, or the third log sampling ratio and the third log level.

In one embodiment, the log sampling ratio is N/M and N is less than or equal to M.

In one embodiment, the interceptor is further configured to, after receiving the service request, randomly select a number X from 0-M and determine whether X is less than N.

As can be seen from the above, in the server provided by the embodiments of the present disclosure, through setting a dynamic log sampling ratio by the configuration center based on the operating state of an application on a server, the amount of log printing may be controlled in real time, and may be increased and decreased as necessary. This may not only reduce the burden on the CPU, but also increase the throughput of the CPU and memory without affecting the locating of the cause of an anomaly. Moreover, in the embodiments of the present disclosure, different log sampling ratios may be set for different interfaces of a same application, which further reduces the burden on the CPU and increases the throughput of the CPU and memory.

FIG. 4 illustrates a structural schematic diagram of a computer terminal according to some embodiments of the present disclosure. In the present disclosure, the technical solutions of the disclosed embodiments may be applied to a computer terminal 10 shown in FIG. 4. The computer terminal 10 may include one or more (only one is shown in the figure) processors 102 (a processor 102 may include, but is not limited to, a processing device such as a micro-controller MCU or a programmable logic device FPGA), a memory 104 for storing data, and a transmission device 106 for communication purpose. It is to be understood by those skilled in the art that the structure shown in FIG. 4 is provided by way of illustration, but not by way of limitation of the structures of the above-described electronic devices. For example, the computer terminal 10 may also include more or fewer components than those shown in FIG. 4, or have a different configuration than that shown in FIG. 4.

Specifically, in the present disclosure, the foregoing log printing methods may be stored as a computer program in the above-described memory 104. The memory 104 may be coupled to the processor 102. Accordingly, when the processor 102 executes the computer program in the memory 104, the processes in the foregoing log printing methods may be implemented.

The memory 104 may be used to store software programs and modules of application software. The processor 102 implements various functional applications and data processing by executing software programs and modules stored in the memory 104. The memory 104 may include a high-speed random-access memory, and also a non-volatile memory, such as one or more magnetic storage devices, flash memory, or other non-volatile solid-state memory. In some applications, the memory 104 may further include a memory remotely disposed with respect to the processor 102, which may be connected to the computer terminal 10 through a network. Examples of such network include, but are not limited to, the Internet, an intranet, a local area network, a mobile communication network, and combinations thereof.

The transmission device 106 is configured to receive or transmit data via the network. The aforementioned specific examples of the network may include a wireless network provided by the communication provider of the computer terminal 10. In one application, the transmission device 106 includes a network interface controller (NIC) that may be connected to other network devices through the base stations to allow it to communicate with the Internet. In one application, the transmission device 106 may be a Radio Frequency (RF) module that is configured to communicate with the Internet via a wireless approach.

Through the foregoing description of the embodiments, it is clear to those skilled in the art that each embodiment may be implemented by means of software plus a necessary general hardware platform, and apparently, by means of hardware as well. Based on this understanding, the technical solutions, or essentially the parts that contribute to the existing technologies, may be embodied in the form of a software product. The computer software product may be stored in a computer-readable storage medium, such as a ROM/RAM, a magnetic disc, an optical disc, etc., and include a series of instructions that cause a computing device (which may be a personal computer, a server, or a network device, etc.) to implement each embodiment or methods described in certain parts of each embodiment.

Although the present disclosure has been described as above with reference to preferred embodiments, these embodiments are not constructed as limiting the present disclosure. Any modifications, equivalent replacements, and improvements made without departing from the spirit and principle of the present disclosure shall fall within the scope of the protection of the present disclosure.

## Claims

1. A log printing method, comprising:
configuring a log sampling ratio and a log level for an application;
after the application receives a service request, determining, based on the log sampling ratio, whether to print all logs and caching a sampling tag;
when the application processes the service request, reading the sampling tag and the log level;
when the read sampling tag indicates no sampling, processing, by the application, the service request and printing, by the application, logs that have a log level equal to and higher than the configured log level and correspond to the service request; and
when the read sampling tag indicates a sampling, processing, by the application, the service request and printing, by the application, all logs that correspond to the service request.

2. The log printing method according to claim 1, further comprising:
when the log sampling ratio and/or the log level is changed, pushing the changed log sampling ratio and/or log level to an interface of the application, and receiving, by the application through the interface, the changed log sampling ratio and/or log level and updating the log sampling ratio and/or log level.

3. The log printing method according to claim 2, wherein the application includes a plurality of interfaces, and each of the plurality of interfaces is provided with a corresponding log sampling ratio and a corresponding log level.

4. The log printing method according to claim 3, wherein the log sampling ratio and the log level include a first log sampling ratio and a first log level, a second log sampling ratio and a second log level, and a third log sampling ratio and a third log level, and the first log sampling ratio is greater than the second log sampling ratio, the first log level is lower than the second log level, the third log sampling ratio is greater than or equal to the first log sampling ratio, and the third log level is lower than or equal to the first log level.

5. The log printing method according to claim 4, when the application is put in service for the first time, printing, by the application, logs that correspond to the service request according to the first log sampling ratio and the first log level, when the application runs stably, printing, by the application, logs that correspond to the service request according to the second log sampling ratio and the second log level, and when the application runs abnormally, printing, by the application, logs that correspond to the service request according to the third log sampling ratio and the third log level.

6. The log printing method according to any one of claims 1 to 5, wherein the log sampling ratio is N/M, and N is less than or equal to M.

7. The log printing method according to claim 6, wherein determining, based on the log sampling ratio, whether to print all logs and caching the sampling tag after the application receives the service request further includes:
after the application receives the service request, randomly selecting, by the application, a number X from 0-M; and
determining whether X is less than N, if X is less than N, printing, by the application, all logs that correspond to the service request, and if X is greater than or equal to N, printing, by the application, logs that correspond to the service request and have a log level lower than the configured log level.

8. A log printing system, comprising a configuration center and a server, the configuration center and the server together implementing the log printing method according to any one of claims 1 to 7.

9. A server running at least one application module, wherein the application module comprises:
an interceptor that is configured to, after receiving a service request, determine, based on a log sampling ratio, whether to print all logs and cache a sampling tag; and
a log printer that is configured to read the sampling tag and a configured log level in a process of processing the service request, print all logs that correspond to the service request when the read sampling tag indicates a sampling, and print logs that have a log level equal to and higher than the configured log level and correspond to the service request when the read sampling tag indicates no sampling.

10. The server according to claim 9, wherein the application module includes a plurality of interfaces, and each of the plurality of interfaces is provided with a corresponding log sampling ratio and a corresponding log level.

11. The server according to claim 10, wherein the log sampling ratio and the log level include a first log sampling ratio and a first log level, a second log sampling ratio and a second log level, and a third log sampling ratio and a third log level, and the first log sampling ratio is greater than the second log sampling ratio, the first log level is lower than the second log level, the third log sampling ratio is greater than or equal to the first log sampling ratio, and the third log level is lower than or equal to the first log level.

12. The server according to claim 11, wherein the log printer is further configured to print logs corresponding to the service request based on the first log sampling ratio and the first log level, or the second log sampling ratio and the second log level, or the third log sampling ratio and the third log level.

13. The server according to any one of claims 9 to 12, wherein the log sampling ratio is N/M, and N is less than or equal to M.

14. The server according to claim 13, wherein the interceptor is further configured to, after receiving the service request, randomly select a number X from 0-M, and determine whether X is less than N.
